(19) **Europäisches Patentamt European Patent Office Office européen des brevets**

(11) **EP 3 849 908 B1**

(12) **FASCICULE DE BREVET EUROPEEN**

(45) Date de publication et mention
de la délivrance du brevet:
**07.06.2023 Bulletin 2023/23**

(21) Numéro de dépôt: **19774167.1**

(22) Date de dépôt: **02.09.2019**

(51) Classification Internationale des Brevets (IPC):
**B64D 27/24** *(2006.01)* **B64D 35/02** *(2006.01)*

(52) Classification Coopérative des Brevets (CPC):
**B64D 27/24; B64D 35/02;** B64D 2027/026;
Y02T 10/70; Y02T 10/7072; Y02T 50/60;
Y02T 90/14

(86) Numéro de dépôt international:
**PCT/FR2019/052021**

(87) Numéro de publication internationale:
**WO 2020/053502 (19.03.2020 Gazette 2020/12)**

(54) **ENSEMBLE PROPULSIF HYBRIDE SERIE POUR AERONEF**

HYBRIDANTRIEBSANORDNUNG FÜR EIN FLUGZEUG

HYBRID PROPULSION ASSEMBLY FOR AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.09.2018 FR 1858172**

(43) Date de publication de la demande:
**21.07.2021 Bulletin 2021/29**

(73) Titulaire: **SAFRAN
75015 Paris (FR)**

(72) Inventeurs:
• **SALANNE, Jean-Philippe Hervé
77550 Moissy-Cramayel (FR)**
• **PETIBON, Stéphane
77550 Moissy-Cramayel (FR)**
• **ROUGIER, Florent
77550 Moissy-Cramayel (FR)**

(74) Mandataire: **Cabinet Beau de Loménie
158, rue de l'Université
75340 Paris Cedex 07 (FR)**

(56) Documents cités:
**EP-A1- 2 995 555** **EP-A1- 3 228 544**
**EP-A1- 3 296 212** **US-A1- 2015 367 950**
**US-A1- 2017 129 617**

EP 3 849 908 B1

## Description

### Arrière-plan de l'invention

L'invention se rapporte à la propulsion électrique dédiés aux aéronefs et concerne plus particulièrement les nouvelles architectures s'appuyant sur l'hybridation série de sources de puissance électrique qui permet de multiplier le nombre de rotor et donc d'améliorer potentiellement la robustesse des aéronefs vis-à-vis des pannes rotor.

L'hybridation série de sources de puissance électrique consiste à associer un turbogénérateur (turbine à gaz + génératrice électrique) avec une batterie. Cette hybridation permet d'associer les performances de chacune des sources et permet de bénéficier d'un système plus sûr en cas de perte de l'une des sources électriques.

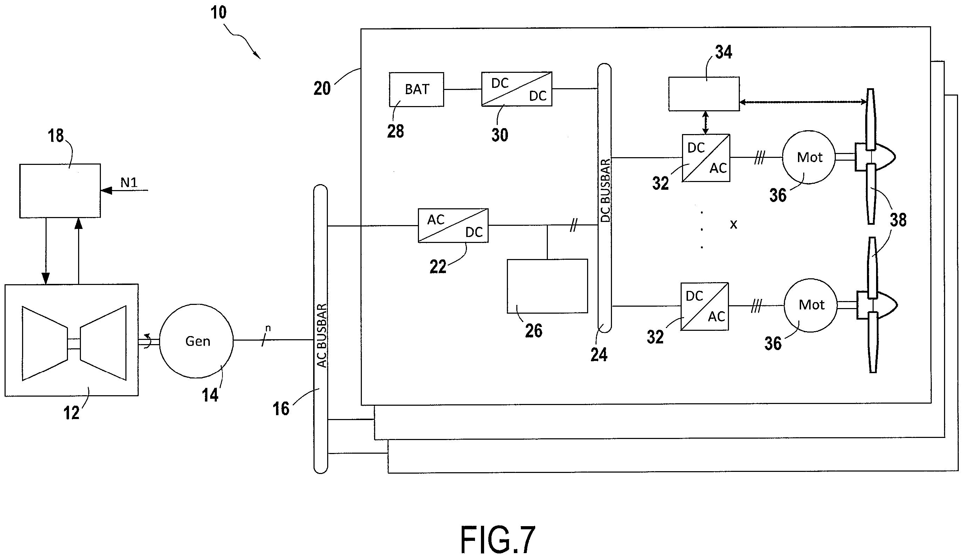

Classiquement et comme le montre la figure 7, un ensemble propulsif hybride série 10 comporte une turbine à gaz 12 (à turbine libre ou liée) entrainant l'arbre mécanique d'une génératrice électrique 14 disposant de n phases en sortie et alimentant une barre de distribution AC 16, et un système de contrôle (mesure et commande) de la vitesse de la turbine à gaz 18 (vitesse de rotation fixe N1). La barre de distribution AC 16 alimente une pluralité de canaux de distribution AC 20 composés chacun d'un redresseur électrique 22 de type redresseur commandé alimentant un bus DC 24, d'un dispositif de stockage ou de dissipation électrique 26 permettant de gérer les lâchers de charges (limitation de la tension du bus DC), d'une batterie 28 en série avec un convertisseur réversible DC/DC 30 permettant de gérer la charge et la décharge de la batterie et alimentant le bus DC 24 en parallèle du redresseur électrique 22. Le bus DC 24 alimente à son tour une pluralité de sous-canaux propulsifs composés d'onduleurs électriques 32 alimentant sous l'action d'un module de commande de poussée 34 les moteurs 36 entrainant les hélices de l'aéronef 38.

Le problème avec une telle architecture est que le convertisseur réversible DC/DC est nécessairement surdimensionné (un autre exemple est aussi donné par la demande européenne EP3296212). En effet, ce dernier gère la charge et la décharge de la batterie mais également le taux d'hybridation entre la batterie et génératrice électrique qui se partage la puissance nécessaire à l'alimentation du bus DC. Le convertisseur est donc dimensionné par rapport à la puissance de décharge à fournir, c'est-à-dire la puissance des propulseurs (ou une grande partie de cette puissance), ce qui, par exemple pour une batterie li-ion, représente de trois à six fois la puissance de recharge de la batterie. Le convertisseur est donc surdimensionné et son poids et son volume impactent fortement le poids de l'aéronef et en conséquence la charge transportable.

### Objet et résumé de l'invention

La présente invention propose donc une nouvelle architecture d'ensemble propulsif hybride série pour aéronef palliant les inconvénients précités.

Ce but est atteint avec un ensemble propulsif hybride série comportant une turbine à gaz entraînant un arbre mécanique d'une génératrice électrique disposant de n phases en sortie et alimentant une barre de distribution AC, et un système de contrôle de la vitesse de la turbine à gaz, ladite barre de distribution AC alimentant une pluralité de canaux de distribution AC composés chacun d'un redresseur électrique et d'une batterie se partageant la puissance nécessaire à l'alimentation d'un bus DC, ledit bus DC alimentant à son tour une pluralité de sous-canaux propulsifs composés d'onduleurs électriques alimentant sous le contrôle d'un module de commande des moteurs entraînant des propulseurs, ensemble caractérisé en ce qu'il comporte en outre :

- un chargeur de batterie pour charger ladite batterie depuis ledit bus DC,

- un module de gestion de puissance délivrant une référence en puissance pour ladite génératrice électrique,

- un module de gestion du taux d'hybridation pour gérer le partage de puissance entre ladite génératrice électrique et ladite batterie en contrôlant la tension dudit bus DC,

et en ce que ladite batterie est connectée directement sur ledit bus DC via un composant passif et ledit redresseur électrique est un convertisseur passif (non commandé).

Avantageusement, ledit composant passif est formé d'une simple diode et ledit convertisseur passif est formé d'un simple pont de diodes. Ledit chargeur de batterie est formé par un simple convertisseur DC/DC non réversible.

Ainsi, en utilisant une diode pour la décharge de la batterie et un convertisseur DC/DC non réversible, dédié et dimensionné uniquement pour la charge de la batterie, il est possible de réduire le redresseur électrique à simple pont de diodes et d'optimiser la connexion de la batterie sur le bus DC dont le contrôle de la tension permet en outre de contrôler efficacement le taux d'hybridation.

Selon le mode de réalisation envisagé, l'ensemble comporte un dispositif autonome de limitation de la tension du bus DC ou ledit chargeur de batterie forme un dispositif de limitation de la tension du bus DC en assurant également une gestion des lâchers de charges.

Selon un mode de réalisation particulier, ledit module de gestion du taux d'hybridation est configuré pour contrôler ladite tension de bus DC via la vitesse de rotation de ladite génératrice électrique soit via la tension de sortie de ladite génératrice électrique. Lorsque la génératrice électrique est une génératrice à rotor bobiné, ladite tension de sortie est contrôlée via le courant d'excitation imposé au niveau du rotor de ladite génératrice électrique.

## Brève description des dessins

L'invention sera mieux comprise à la lecture de la description faite ci-après à titre indicatif mais non limitatif en référence aux figures suivantes sur lesquelles :

- la figure 1 est un schéma de principe d'un ensemble propulsif hybride série conforme à l'invention,

- la figure 2 est un logigramme de contrôle du taux d'hybridation via la vitesse de sortie de la turbine à gaz,

- la figure 3 illustre un exemple de réalisation du contrôle de la figure 2 par la régulation de la vitesse de la turbine à gaz,

- la figure 4 montre les différentes formes d'ondes au niveau de points caractéristiques de l'ensemble propulsif de la figure 1,

- la figure 5 est un logigramme de contrôle du taux d'hybridation via la tension de sortie de la génératrice,

- la figure 6 illustre un exemple de réalisation du contrôle de la figure 4 par la régulation de la tension de la génératrice, et

- la figure 7 est un schéma de principe d'un ensemble propulsif hybride série selon l'art antérieur.

## Description détaillée de modes de réalisation de l'invention

L'invention trouve plus particulièrement application dans les applications propulsives de type VTOL (pour Vertical Take Off & Landing) où chaque propulseur est associé à un convertisseur.

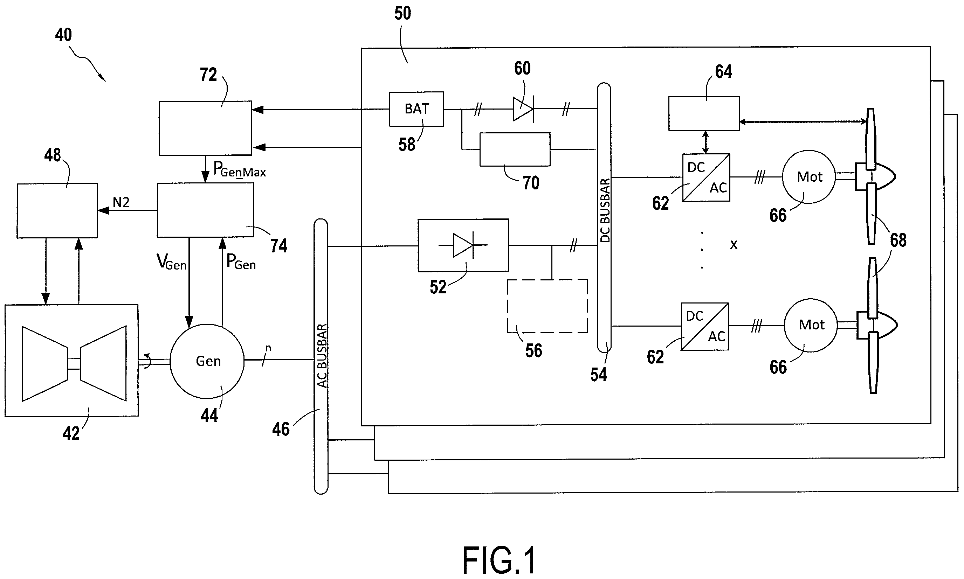

La figure 1 montre un ensemble propulsif hybride série 40 conforme à l'invention et comportant une turbine à gaz 42 (à turbine libre ou liée) entraînant l'arbre mécanique d'une génératrice électrique 44 disposant de n phases en sortie et alimentant une barre de distribution AC 46, et un système de contrôle (mesure et commande) de la vitesse de la turbine à gaz 48. La barre de distribution AC 46 alimente une pluralité de canaux de distribution AC 50 composés chacun d'un redresseur électrique 52, convertisseur passif formé d'un simple pont de diodes alimentant un bus DC 54, facultativement d'un dispositif autonome 56 de stockage ou de dissipation électrique permettant de gérer les lâchers de charges (limitation de la tension du bus DC), d'une batterie 58 connectée directement sur le bus DC via une simple diode 60, composant passif en permettant sa décharge. Le bus DC 54 alimente à son tour une pluralité de sous-canaux propulsifs composés d'onduleurs électriques 62 alimentant sous l'action d'un module de commande de poussée 64 des moteurs 66 entraînant des hélices de l'aéronef (propulseurs 68).

Selon l'invention, cet ensemble propulsif hybride série comporte également un chargeur de batterie 70 formé d'un simple convertisseur DC/DC non réversible, dédié à la charge de la batterie et relié au bus DC 54, un module de gestion de puissance 72 et un module de gestion du taux d'hybridation 74.

Le module de gestion de puissance 72 définit une référence en puissance $P_{Gen\_Max}$ que doit fournir la génératrice 44 à partir de l'état de charge de la batterie (State-Of-Charge en anglais, SOC) et d'autres informations utiles comme l'altitude, la vitesse, la température, la localisation, les réserves carburants, etc..., ce qui permet de faire le partage de puissance entre la génératrice et la batterie 58. Cette puissance maximale de référence est fournie au module de gestion du taux d'hybridation 74 qui va contrôler la tension du bus DC 54 afin de contrôler le taux de décharge de la batterie et donc gérer ce partage de puissance entre génératrice et batterie. Si la tension du bus DC est supérieure à la tension de la batterie alors la décharge de la batterie ne peut se faire, la diode 60 étant bloquée. Au contraire, si la tension de bus DC est inférieure à la tension de la batterie, alors la batterie fournira de la puissance, la diode 60 étant alors passante. La recharge de la batterie pourra se faire via le chargeur de batterie dédié 70.

Le contrôle de la tension du bus DC 54 peut se faire selon deux réalisations distinctes soit par le contrôle de la vitesse de rotation de la génératrice électrique (et donc de la vitesse en sortie de la turbine à gaz) soit par le contrôle de la tension alternative de sortie de cette génératrice électrique.

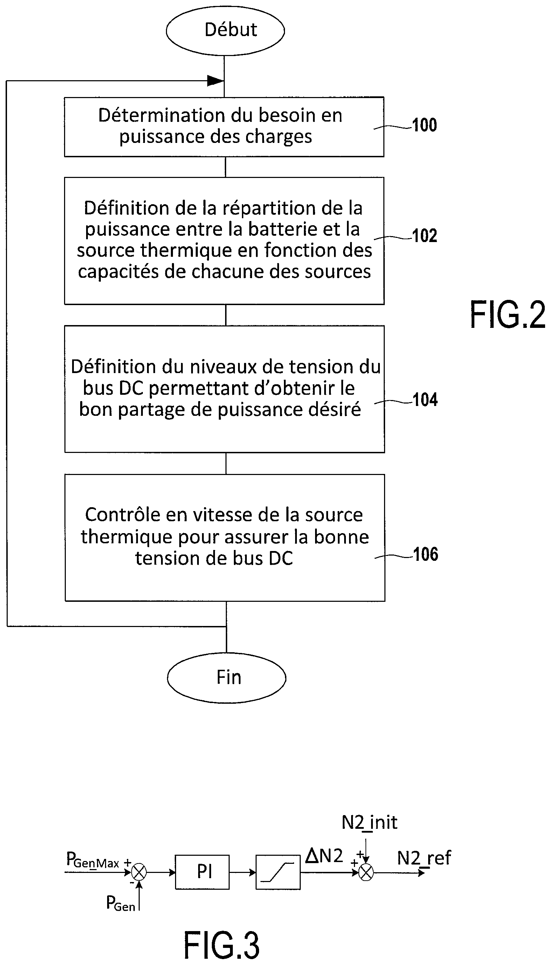

La figure 2 illustre par un logigramme la stratégie de contrôle du taux d'hybridation par le contrôle de la vitesse de sortie de la turbine à gaz qui peut être décrit par les étapes suivantes.

Dans une première étape 100, il est déterminé par le module de gestion du taux d'hybridation 74 le besoin de puissance des différentes charges puis dans une étape 102 la répartition de la puissance entre la batterie et la source thermique en fonction des capacités de chacune d'entre elles est définie par le module de gestion du taux d'hybridation 74. Le niveau de tension du bus DC est alors défini dans une étape suivante 104 par le module de gestion du taux d'hybridation 74 pour obtenir le partage de puissance désiré et le contrôle de la vitesse de la source thermique est contrôlé dans une étape finale 106 par le module de gestion du taux d'hybridation 74 pour s'assurer que cette tension du bus DC est bien celle désirée.

En effet, lors de l'utilisation d'une génératrice à aimant permanent (ou d'une génératrice à flux rotorique constant), on peut écrire, en première approximation, l'équation suivante :

$$V_{dc\_busbar}=k_{\_gen}*\omega*k_{\_rectifier}$$

Avec $V_{dc\_busbar}$ la tension de Bus DC,

$k_{\_gen}$, le coefficient lié la génératrice,

$\omega$, la vitesse de rotation de la génératrice,

$k_{\_rectifier}$, le gain lié au redresseur électrique.

Les paramètres k pouvant être considérés comme constants, la vitesse $\omega$ permet donc bien de contrôler la tension du bus DC et par conséquent le taux de décharge de la batterie.

La figure 3 montre un exemple d'implantation au niveau du module de gestion d'hybridation 74 de la stratégie d'hybridation utilisant le procédé de la figure 2, N2 étant la vitesse de la turbine à gaz et de la génératrice électrique et $P_{Gen\_Max}$ la puissance de référence maximale que doit fournir la génératrice. Dans ce cas, la référence N2_ref conduira directement à une tension de bus DC. La vitesse N2 est déterminée pour limiter la puissance que fournit la turbine à gaz étant entendu que la batterie va naturellement fournir le reste aux charges. Ainsi, quand la tension de la génératrice baisse (équivalent à la vitesse N2), la génératrice fourni moins de puissance et la batterie compense la différence par rapport au besoin des charges. Par contre, quand la tension de la génératrice monte, la puissance de cette dernière augmente limitant le recours à la batterie.

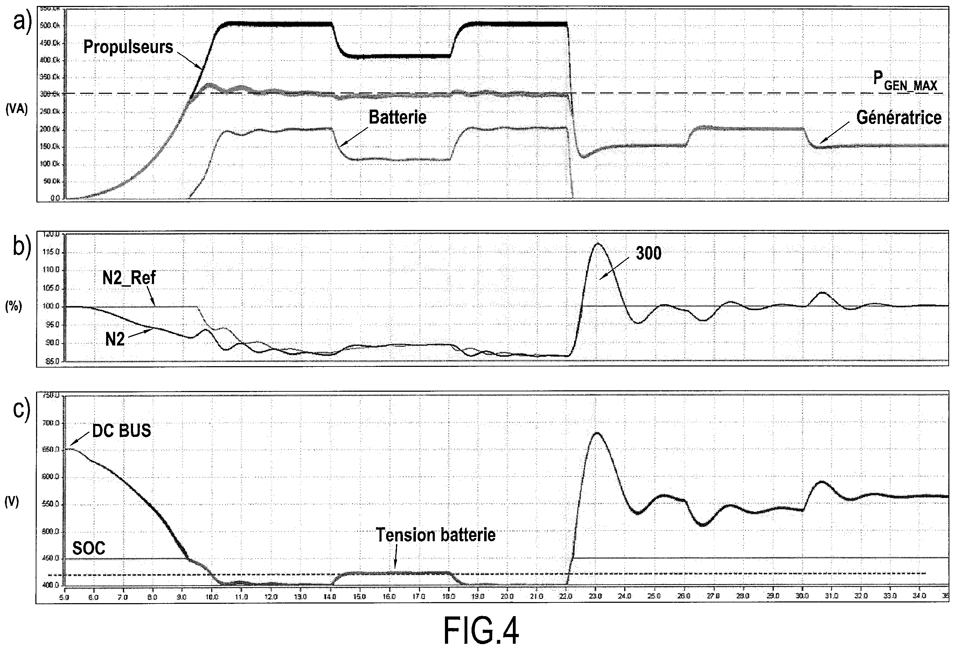

La figure 4 montre différentes formes d'ondes qui peuvent être observées au sein de l'ensemble propulsif de l'invention. A la figure 4a, on observe les différentes puissances fournies aux propulseurs 68, à la batterie 58 et à la génératrice électrique 44 ainsi que la limitation de cette dernière par le module de gestion de puissance 72 à la puissance maximale $P_{Gen\_Max}$. A la figure 4b, on observe la vitesse de la génératrice électrique et la vitesse de référence N2_ref et on peut noter en 300 le besoin d'un dispositif de dissipation (autonome 56 ou chargeur de batterie 70) pour éviter les survitesses de la turbine à gaz 42. A la figure 4c, on observe la tension de bus DC et celle de la batterie.

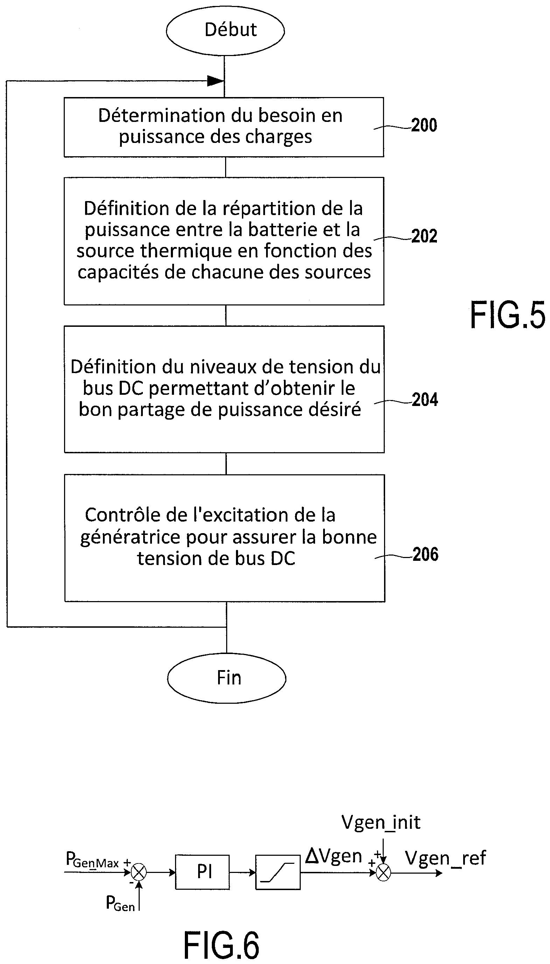

La figure 5 illustre par un logigramme la stratégie de contrôle du taux d'hybridation par le contrôle de la tension de sortie de la génératrice électrique qui peut être décrit par les étapes suivantes.

Dans une première étape 200, il est déterminé par le module de gestion du taux d'hybridation 74 le besoin de puissance des différentes charges puis dans une étape 202 la répartition de la puissance entre la batterie et la source thermique en fonction des capacités de chacune d'entre elles est définie par le module de gestion du taux d'hybridation 74. Le niveau de tension du bus DC est alors défini dans une étape suivante 204 par le module de gestion du taux d'hybridation 74 pour obtenir le partage de puissance désiré et le contrôle de l'excitation de la génératrice électrique est assuré dans une étape finale 206 par le module de gestion du taux d'hybridation 74 pour s'assurer que cette tension du bus DC est bien celle désirée.

Lors de l'utilisation d'une génératrice à rotor bobiné, la tension de sortie peut être contrôlée via le courant d'excitation imposé au niveau du rotor de la machine. On peut écrire, en première approximation, l'équation suivante :

$$V_{dc\_busbar}=k_{\_gen}*\omega*I_{exc}*k_{\_rectifier}$$

Avec $V_{dc\_busbar}$ la tension de Bus DC,

$k_{\_gen}$, le coefficient lié la génératrice,

$\omega$, la vitesse de rotation de la génératrice,

$I_{exc}$, le courant d'excitation,

$k_{\_rectifier}$, le gain lié au redresseur électrique.

Les paramètres k et $\omega$ pouvant être considérés comme constants, le courant d'excitation $I_{exc}$ permet donc de contrôler la tension du bus DC et par conséquent le taux de décharge de la batterie.

La figure 6 montre un exemple d'implantation au niveau du module de gestion d'hybridation 74 de la stratégie d'hybridation utilisant le procédé de la figure 5, Vgen étant la tension aux bornes de la génératrice électrique et comme précédemment $P_{Gen\_Max}$ la puissance maximale que peut fournir la génératrice. Dans ce cas, la référence Vgen_ref conduira directement à une tension de bus DC. Elle est déterminée pour limiter la puissance que fournit la turbine à gaz étant entendue que comme précédemment la batterie va naturellement fournir le reste aux charges. Et comme précédemment, quand la tension de la génératrice baisse, la génératrice fourni moins de puissance et la batterie compense la différence par rapport au besoin des charges. Par contre, quand la tension de la génératrice monte, la puissance de cette dernière augmente limitant le recours à la batterie.

Avec une batterie connectée via un simple composant passif pour sa décharge, l'invention est néanmoins capable d'hybrider cette batterie de manière indirecte avec la génératrice électrique par un contrôle en tension de la source électrique composée de la machine thermique, de cette génératrice électrique et du convertisseur passif. Le contrôle de l'hybridation se fait donc sans l'aide d'une électronique de puissance commandable (à l'exception de la recharge batterie) comme le nécessitait l'art antérieur. De plus, lorsque l'ensemble propulsif ne comporte pas de dispositif spécifique de lâchers de charges, le chargeur de batterie peut assurer également la fonction de limitation de la tension de bus DC.
Cette capacité d'hybridation indirecte par contrôle d'une tension de bus par la source électrique alors que la batterie est connectée avec des composants passifs est particulièrement innovante au vu de l'état de l'art.

## Revendications

1. Ensemble propulsif hybride série (40) comportant une turbine à gaz (42) entraînant un arbre mécanique d'une génératrice électrique (44) disposant de n phases en sortie et alimentant une barre de distribution AC (46), et un système de contrôle de la vitesse de la turbine à gaz (48), ladite barre de distribution AC alimentant une pluralité de canaux de distribution AC (50) composés chacun d'un redresseur électrique (52) et d'une batterie (58) se partageant la puissance nécessaire à l'alimentation d'un bus DC (54), ledit bus DC alimentant à son tour une pluralité de sous-canaux propulsifs composés d'onduleurs électriques (62) alimentant sous le contrôle d'un module de commande (64) des moteurs (66) entraînant des propulseurs (68), ensemble **caractérisé en ce qu'**il comporte en outre :

   . un chargeur de batterie (70) pour charger ladite batterie depuis ledit bus DC,
   . un module de gestion de puissance (72) délivrant une référence en puissance pour ladite génératrice électrique,
   . un module de gestion du taux d'hybridation (74) pour gérer le partage de puissance entre ladite génératrice électrique et ladite batterie en contrôlant la tension dudit bus DC,

   et **en ce que** ladite batterie est connectée directement sur ledit bus DC via un composant passif (60) et ledit redresseur électrique est un convertisseur passif.

2. Ensemble propulsif hybride série selon la revendication 1, **caractérisé en ce que** ledit composant passif est formé d'une simple diode (60).

3. Ensemble propulsif hybride série selon la revendication 1, **caractérisé en ce que** ledit convertisseur passif est formé d'un simple pont de diodes (52).

4. Ensemble propulsif hybride série selon la revendication 1, **caractérisé en ce que** ledit chargeur de batterie est formé par un simple convertisseur DC/DC non réversible.

5. Ensemble propulsif hybride série selon la revendication 1, **caractérisé en ce qu'**il comporte en outre un dispositif autonome (56) de limitation de la tension du bus DC.

6. Ensemble propulsif hybride série selon la revendication 1, **caractérisé en ce que** ledit chargeur de batterie forme un dispositif de limitation de la tension du bus DC en assurant également une gestion des lâchers de charges.

7. Ensemble propulsif hybride série selon l'une quelconque des revendications 1 à 6, **caractérisé en ce que** ledit module de gestion du taux d'hybridation est configuré pour contrôler ladite tension de bus DC via la vitesse de rotation de ladite génératrice électrique.

8. Ensemble propulsif hybride série selon l'une quelconque des revendications 1 à 6, **caractérisé en ce que** ledit module de gestion du taux d'hybridation est configuré pour contrôler ladite tension de bus DC via la tension de sortie de ladite génératrice électrique.

9. Ensemble propulsif hybride série selon la revendication 8, dans lequel la génératrice électrique est une génératrice à rotor bobiné, **caractérisé en ce que** ladite tension de sortie est contrôlée via un courant d'excitation imposé au niveau d'un rotor de ladite génératrice électrique.

10. Ensemble propulsif hybride série selon l'une quelconque des revendications 1 à 9, **caractérisé en ce que** lesdits propulseurs sont des hélices d'un aéronef.

## Patentansprüche

1. Serienhybrid-Antriebsanordnung (40), die eine Gasturbine (42), die eine mechanische Welle eines elektrischen Generators (44) antreibt, der über n Phasen am Ausgang verfügt und eine AC-Verteilerschiene (46) versorgt, und ein Gasturbinen-Drehzahlregelsystem (48) beinhaltet, wobei die AC-Verteilerschiene mehrere AC-Verteilerkanäle (50) versorgt, die jeweils aus einem elektrischen Gleichrichter (52) und einer Batterie (58) aufgebaut sind, welche sich die für die Versorgung einer DC-Busleistung (54) notwendige Leistung teilen, wobei die DC-Busleitung ihrerseits mehrere Antriebs-Teilkanäle versorgt, die aus elektrischen Wechselrichtern (62) aufgebaut sind, die unter der Steuerung eines Steuermoduls (64) Motoren (66) versorgen, die Triebwerke (68) antreiben, **dadurch gekennzeichnet, dass** sie ferner beinhaltet:

   - ein Batterieladegerät (70) zum Laden der Batterie von der DC-Busleitung aus,

- ein Leistungsverwaltungsmodul (72), das eine Leistungsreferenz für den elektrischen Generator liefert,
- ein Modul zur Verwaltung des Hybridisierungsgrads (74) zum Verwalten der Aufteilung der Leistung zwischen dem elektrischen Generator und der Batterie durch Steuern der Spannung der DC-Busleitung,

und dass die Batterie direkt über ein passives Bauteil (60) an die DC-Busleitung angeschlossen ist und der elektrische Gleichrichter ein passiver Wandler ist.

2. Serienhybrid-Antriebsanordnung nach Anspruch 1, **dadurch gekennzeichnet, dass** das passive Bauteil aus einer einfachen Diode (60) gebildet ist.

3. Serienhybrid-Antriebsanordnung nach Anspruch 1, **dadurch gekennzeichnet, dass** der passive Wandler aus einer einfachen Diodenbrücke (52) gebildet ist.

4. Serienhybrid-Antriebsanordnung nach Anspruch 1, **dadurch gekennzeichnet, dass** das Batterieladegerät aus einem einfachen, nicht invertierbaren DC/DC-Wandler gebildet ist.

5. Serienhybrid-Antriebsanordnung nach Anspruch 1, **dadurch gekennzeichnet, dass** sie ferner eine autonome Vorrichtung (56) zur Spannungsbegrenzung der DC-Busleitung beinhaltet.

6. Serienhybrid-Antriebsanordnung nach Anspruch 1, **dadurch gekennzeichnet, dass** das Batterieladegerät eine Vorrichtung zur Spannungsbegrenzung der DC-Busleitung bildet, indem es auch eine Verwaltung von Lastabwürfen sicherstellt.

7. Serienhybrid-Antriebsanordnung nach einem der Ansprüche 1 bis 6, **dadurch gekennzeichnet, dass** das Modul zur Verwaltung des Hybridisierungsgrads dazu ausgestaltet ist, die Spannung der DC-Busleitung über die Drehzahl des elektrischen Generators zu steuern.

8. Serienhybrid-Antriebsanordnung nach einem der Ansprüche 1 bis 6, **dadurch gekennzeichnet, dass** das Modul zur Verwaltung des Hybridisierungsgrads dazu ausgestaltet ist, die Spannung der DC-Busleitung über die Ausgangsspannung des elektrischen Generators zu steuern.

9. Serienhybrid-Antriebseinheit nach Anspruch 8, wobei der elektrische Generator ein Generator mit gewickeltem Läufer ist, **dadurch gekennzeichnet, dass** die Ausgangsspannung über einen Erregerstrom gesteuert wird, der an einem Läufer des elektrischen Generators angelegt wird.

10. Serienhybrid-Antriebsanordnung nach einem der Ansprüche 1 bis 9, **dadurch gekennzeichnet, dass** die Triebwerke Propeller eines Luftfahrzeugs sind.

**Claims**

1. Series hybrid propulsion unit (40) including a gas turbine (42) driving a mechanical shaft of an electric generator (44) having n output phases and supplying an AC busbar (46), and a system for monitoring the speed of the gas turbine (48), said AC busbar supplying a plurality of AC distribution channels (50) each composed of an electric rectifier (52) and of a battery (58) sharing the power required to supply a DC bus (54), said DC bus in turn supplying a plurality of propulsion sub-channels composed of electric inverters (62) supplying, under the monitoring of a control module (64), motors (66) driving thrusters (68), which unit being **characterized in that** it further includes:

 . a battery charger (70) for charging said battery from said DC bus,
 . a power management module (72) delivering a power reference for said electric generator,
 . a hybridization rate management module (74) for managing the power sharing between said electric generator and said battery by monitoring the voltage of said DC bus,

and **in that** said battery is directly connected on said DC bus via a passive component (60) and said electric rectifier is a passive converter.

2. Series hybrid propulsion unit according to claim 1, **characterized in that** said passive component is formed of a single diode (60).

3. Series hybrid propulsion unit according to claim 1, **characterized in that** said passive converter is formed of a single diode bridge (52).

4. Series hybrid propulsion unit according to claim 1, **characterized in that** said battery charger is formed by a single non-reversible DC/DC converter.

5. Series hybrid propulsion unit according to claim 1, **characterized in that** it further includes an autonomous device (56) for limiting the voltage of the DC bus.

6. Series hybrid propulsion unit according to claim 1, **characterized in that** said battery charger forms a device for limiting the voltage of the DC bus while also ensuring a management of the releases of charges.

7. Series hybrid propulsion unit according to any one of claims 1 to 6, **characterized in that** said hybridization rate management module is configured to monitor said DC bus voltage via the speed of rotation of said electric generator.

8. Series hybrid propulsion unit according to any one of claims 1 to 6, **characterized in that** said hybridization rate management module is configured to monitor said DC bus voltage via the output voltage of said electric generator.

9. Series hybrid propulsion unit according to claim 8, wherein the electric generator is a wound rotor generator, **characterized in that** said output voltage is monitored via an excitation current imposed at a rotor of said electric generator.

10. Series hybrid propulsion unit according to any one of claims 1 to 9, **characterized in that** said thrusters are propellers of an aircraft.

FIG.1

Début

Détermination du besoin en puissance des charges ⁓100

Définition de la répartition de la puissance entre la batterie et la source thermique en fonction des capacités de chacune des sources ⁓102

Définition du niveaux de tension du bus DC permettant d'obtenir le bon partage de puissance désiré ⁓104

Contrôle en vitesse de la source thermique pour assurer la bonne tension de bus DC ⁓106

Fin

FIG.2

$P_{GenMax}$ + ⊗ → PI → ⎓ → $\Delta N2$ + ⊗ → $N2\_ref$

$P_{Gen}$

$N2\_init$

FIG.3

FIG.4

EP 3 849 908 B1

Début

Détermination du besoin en
puissance des charges —200

Définition de la répartition de la
puissance entre la batterie et la
source thermique en fonction des —202
capacités de chacune des sources

Définition du niveaux de tension du
bus DC permettant d'obtenir le —204
bon partage de puissance désiré

Contrôle de l'excitation de la
génératrice pour assurer la bonne —206
tension de bus DC

Fin

## FIG.5

$P_{GenMax}$ + $\otimes$ → PI → ⌐ → $\Delta Vgen$ + $\otimes$ → $Vgen\_ref$

$P_{Gen}$

$Vgen\_init$

## FIG.6

FIG.7

**EP 3 849 908 B1**

## RÉFÉRENCES CITÉES DANS LA DESCRIPTION

**Documents brevets cités dans la description**

- EP 3296212 A